# EUROPEAN PATENT APPLICATION

(11) **EP 2 450 316 A1**
(43) Date of publication of application: **09.05.2012**
(21) Application number: 10794071.0
(22) Date of filing: 24.06.2010
(51) Int. Cl.: C03B 5/167, C03B 3/02, C03B 5/235

(54) **GLASS MELTING FURNACE, PROCESS FOR PRODUCING MOLTEN GLASS, APPARATUS FOR MANUFACTURING GLASS PRODUCTS, AND PROCESS FOR MANUFACTURING GLASS PRODUCTS**

(30) Priority: 01.07.2009 JP 2009156931
(71) Applicant: Asahi Glass Company, Limited, Tokyo 100-8405 (JP)
(72) Inventor: SAKAMOTO, Osamu, Tokyo 100-8405 (JP); TANAKA, Chikao, Tokyo 100-8405 (JP); MIYAZAKI, Seiji, Tokyo 100-8405 (JP); OHKAWA, Satoru, Tokyo 100-8405 (JP)
(74) Representative: Müller-Boré & Partner Patentanwälte
(86) International application number: PCT/JP2010/060790
(87) International publication number: WO 2011/001902

(57) **Abstract**

The present invention provides an apparatus for producing molten glass, a process for producing molten glass, an apparatus for producing a glass product and a process for producing a glass product, which are capable of preventing deterioration of the quality of molten glass caused by deposition of scattered particles on a furnace wall or a flue. In the present invention, together with the operation of introducing and melting glass material particles 36, 36 ··· by an oxygen combustion burner 22, glass cullet pieces 20, 20 ··· are dropped from glass cullet pieces-introducing tubes 18, 18 ··· to form a substantially cylindrical enclosure around a flame 34 by a flow of glass cullet pieces. That is, glass cullet pieces 20, 20 ··· are dropped from eight glass cullet pieces-introducing tubes 18, 18 ··· to partition off the furnace wall 40 from the flame 34. And, particles 44, 44 ··· scattering from the flame are captured as deposited on the surface of falling glass cullet pieces 20, 20 ··· and dropped into glass melt G in the melt reservoir 12.

## Description

### TECHNICAL FIELD

The present invention relates to a glass melting furnace for producing molten glass by forming liquid glass particles from glass material particles in a high temperature gas phase atmosphere, a process for producing molten glass by means of such a glass melting furnace, an apparatus for producing a glass product provided with such a melting furnace, and a process for producing a glass product by using such a production process.

### BACKGROUND ART

Patent Documents 1 and 2 disclose, as a glass melting furnace for producing molten glass by melting and collecting glass material particles in a high temperature gas phase atmosphere, a glass melting furnace provided with an inlet for glass material particles at a ceiling portion of a glass melting furnace and a heating means to form a high temperature gas phase atmosphere to melt the glass material particles.

This glass melting furnace is an apparatus whereby glass material particles introduced into the furnace from an inlet for glass material particles, are melted in a high temperature gas phase atmosphere heated by a heating means, to form liquid glass particles, the liquid glass particles are collected at a bottom of the glass melting furnace to form a glass melt, and the glass melt is temporarily retained at the bottom of the glass furnace and then discharged. Further, such a method for producing molten glass is known as an in-flight melting method. It is said that according to this in-flight melting method, as compared with a melting method by means of a conventional Siemens type furnace, the consumption energy in the glass melting step can be reduced to a 1/3 level, and melting in a short time becomes possible, whereby it is possible to reduce the size of the melting furnace, omit a regeneration chamber, improve the quality, reduce CO₂ and shorten the time for change of the type of glass. Such an in-flight melting method for glass has attracted attention as an energy-saving technique.

Meanwhile, as glass material particles to be introduced from an inlet for glass material particles, it is common to employ ones granulated to a particle size of at most 1 mm. Glass material particles introduced into a glass melting furnace are respectively individually melted to form liquid glass particles during falling (flying) in a high temperature gas phase atmosphere, and the liquid glass particles will fall downward and will be collected at the bottom of the glass melting furnace to form a glass melt. Liquid glass particles formed from such glass material particles are ones which may be referred to as glass liquid droplets. In order to let liquid glass particles be formed from glass material particles in a short time in the high temperature gas phase atmosphere, the particle size of the glass material particles is required to be small as mentioned above. Further, in a usual case, individual liquid glass particles formed from individual glass material particles are required to be particles having substantially the same glass composition.

When both glass material particles and liquid glass particles are small particles, decomposed gas components which are generated when the glass material particles become liquid glass particles, will not be trapped inside of the formed liquid glass particles, and most of them will be released out of the liquid glass particles. Therefore, there is no substantial possibility that bubbles will form in the glass melt formed by collection of liquid glass particles.

On the other hand, the respective glass material particles are particles wherein the constituting material components are substantially uniform, and the glass compositions of the respective liquid glass particles to be formed therefrom are also mutually uniform. As the difference in the glass composition among liquid glass particles is little, there is no substantial possibility that a portion different in the glass composition will form in the glass melt formed by accumulation of many liquid glass particles. Therefore, a homogenizing means to homogenize the glass composition of a glass melt which has been required for a conventional glass melting furnace, is not required in most cases in the in-flight melting method. Even if it happens that a small number of liquid glass particles are different in the glass composition of the rest of majority liquid glass particles, since liquid glass particles are particles having a small particle size, the region different in the glass composition in the glass melt is small, and such a different region will be readily homogenized and will disappear in a short time. Thus, by the in-flight melting method, it is possible to reduce the thermal energy required for homogenizing the glass melt and to shorten the time required for such homogenization.

The glass melting furnace in Patent Document 1 is provided with a plurality of arc electrodes, and/or an oxygen combustion nozzle, as a heating means to form the high temperature gas phase atmosphere, and a high temperature gas phase atmosphere of at least about 1,600°C is formed in the furnace by the thermal plasma arc formed by the plurality of arc electrodes and/or by an oxygen combustion flame (flame) by the oxygen combustion nozzle. By introducing the glass material particles into this high temperature gas phase atmosphere, the glass material particles are changed to liquid glass particles in the high temperature gas phase atmosphere. Further, as the glass material particles to be used in Patent Document 1, ones having a particle size of at most 0.5 mm (weight average) are used from such viewpoints that they can be changed to liquid glass particles in a short time, and release of generated gas is easy. Further, ones having a particle size of at least 0.01 mm (weight average) are used from the viewpoints of avoiding an increase of the costs due to fine pulverization of glass material particles and reduction of the change in the glass composition among liquid glass particles to be formed.

On the other hand, the glass melting furnace in Patent Document 2 is provided with an oxygen burner attached downward on a ceiling wall of a glass melting furnace, as a heating means. To this oxygen burner, a gas supply system and a material supply system are connected so that an assisting gas having an oxygen concentration of at least 90 vol% and glass materials are supplied. Thus, according to this glass melting furnace, while forming a flame downward by combustion by the oxygen burner, glass material particles are supplied downwardly into the flame from the oxygen burner, to form liquid glass particles in the flame, and the formed liquid glass particles are collected at the furnace bottom immediately below the flame, to form a glass melt.

The molten glass of about 1,600°C produced by the glass melting furnace in Patent Document 1 or 2, is supplied to a temperature regulating tank or a refining tank from the glass melting furnace, and cooled here to a temperature for forming (at a level of about 1,000°C in the case of soda lime glass). And, this molten glass is supplied to a forming means for a glass product, such as a float bath, a fusion forming machine, a roll out forming machine, a blow forming machine or a press molding machine, and formed here into glass products of various shapes. And, a formed glass product is cooled to about room temperature by an annealing means and then made into a desired glass product, if necessary, after via a cutting step by a cutting means and/or other subsequent steps.

### PRIOR ART DOCUMENTS

### PATENT DOCUMENTS

- Patent Document 1:: JP-A-2007-297239
- Patent Document 2:: JP-A-2008-120609

### DISCLOSURE OF INVENTION

### TECHNICAL PROBLEM

However, the molten glass production facilities disclosed in Patent Documents 1 and 2 have a problem of scattering of particles. For example, glass material particles supplied to the flame by an oxygen burner disclosed in Patent Document 2 are transported by the flame and melted while moving at a high speed, to become liquid glass particles. At that time, there will be particles departing from the moving direction of the majority of particles and not heading to the furnace bottom, i.e. floating particles. Therefore, some of liquid glass particles formed by melting of glass material particles, or some of particles during conversion to liquid glass particles from gas material particles, become floating particles, which scatter from the high temperature gas phase zone to form liquid glass particles and, without reaching to the glass melt surface, are transported by an exhaust gas stream, thus causing such a problem that they deposit on a furnace wall, or they enter into a flue from an exhaust port and then deposit on the flue. Further, scattering liquid glass particles or particles having the surface converted to liquid glass may become particles solidified during scattering or flying. Further, glass material particles may scatter. Hereinafter, such particles scattering from the high temperature gas phase zone without reaching the glass melt surface, derived from the glass material particles, will be referred to as scattering particles.

By the deposition of scattering particles on a furnace wall, etc., the furnace material of the furnace wall or the wall material of a flue was likely to be chemically corroded, or a reaction product during the corrosion was likely to fall into the glass melt in the furnace thereby to deteriorate the quality of molten glass and at the same time was likely to accelerate the corrosion of the furnace material of the furnace wall or the wall material of the flue.

The present invention has been made in view of such circumstances, and it is an object of the present invention to provide a glass melting furnace, a process for producing molten glass, an apparatus for producing a glass product and a process for producing a glass product, whereby in a process for producing molten glass for forming glass material particles into liquid glass particles in a high temperature gas phase atmosphere and collecting the glass particles at a furnace bottom to form a glass melt, it is possible to prevent deterioration of the quality of molten glass caused by the scattering particles, or corrosion of the inner wall, etc. of the glass melting furnace.

### SOLUTION TO PROBLEM

In order to accomplish the above object, the present invention provides a glass melting furnace for converting glass material particles to liquid glass particles in a gas phase atmosphere in the glass melting furnace, collecting the liquid glass particles at a bottom of the glass melting furnace to form a glass melt and discharging the glass melt, which comprises an inlet for glass material particles provided downward on an upper furnace wall in the glass melting furnace, a heating means below the inlet for glass material particles in the glass melting furnace, to form a gas phase zone to convert the glass material particles to liquid glass particles, a plurality of inlets for glass cullet pieces to introduce glass cullet pieces, provided downward on an upper furnace wall in the glass melting furnace, and disposed at prescribed distances to enclose the inlet for glass material particles and the heating means, a furnace bottom to collect the liquid glass particles to form a glass melt, and a discharge outlet to discharge the glass melt.

Further, in order to accomplish the above object, the present invention provides a process for producing molten glass by means of the glass melting furnace of the present invention, which comprises letting some of particles (floating particles) derived from the glass material particles introduced from the inlet for glass material particles deposit on glass cullet pieces introduced from the plurality of inlets for glass cullet pieces to prevent the particles from scattering from the gas phase zone.

Still further, in order to accomplish the above object, the present invention provides a process for producing molten glass, which comprises converting glass material particles to liquid glass particles in a gas phase atmosphere in a glass melting furnace, and collecting the liquid glass particles at a bottom of the glass melting furnace to form a glass melt, wherein the glass material particles are supplied downward from an upper furnace wall in the glass molten furnace and permitted to pass through a gas phase zone formed by a heating means thereby to be converted to liquid glass particles, glass cullet pieces are supplied downward from an upper furnace wall in the glass melting furnace and permitted to fall so that a flow of the falling glass cullet pieces encloses an area where glass material particles pass through, and the liquid glass particles and the glass cullet pieces are collected at the furnace bottom to form a glass melt.

According to the glass melting furnace and the process for producing molten glass of the present invention, glass cullet pieces are dropped from a plurality of inlets for glass cullet pieces to form a cylindrical flow to enclose the high temperature gas phase zone (the region where glass material particles pass through to form liquid glass particles) made of a flame or a thermal plasma arc formed by a heating means, whereby a furnace wall is partitioned from the high temperature gas phase zone by the cylindrical flow of glass cullet pieces, and at the same time, particles scattering from the high temperature gas phase zone are captured as deposited on the surface of the falling glass cullet pieces, and dropped. It is thereby possible to prevent scattering of particles from the gas phase zone (i.e. scattering particles), whereby amount of scattering particles deposited on the furnace wall or the flue can be drastically reduced, and thus it is possible to prevent deterioration of the quality of molten glass caused by deposition of scattering particles on the furnace wall or the flue. Further, according to the present invention, it is possible to preheat glass cullet pieces by the flame or plasma arc formed by the heating means and to stabilize the flame by the descending flow, and at the same time, it is possible to melt the glass cullet pieces by utilizing an exhaust gas heat.

Further, the gas phase atmosphere melting of glass material particles is carried out by the inlet for glass material particles and the heating means to form the gas phase zone. That is, glass material particles are introduced into the furnace from the inlet for glass material particles, provided downward on an upper furnace wall of the glass melting furnace, and the introduced glass material particles are passed, heated and melted in the high temperature gas phase zone formed by the heating means to form liquid glass particles. The liquid glass particles are collected at the furnace bottom and temporarily retained as a glass melt, whereupon molten glass is discharged from a discharge outlet on the downstream side of the glass melting furnace. Here, the upper furnace wall in the glass melting furnace is meant for the ceiling portion and a range of a side wall within 1 m from the inner wall of the ceiling in the glass melting furnace.

An inlet for glass cullet pieces has a pathway capable of introducing glass cullet pieces of a prescribed size from outside the furnace through the furnace wall into the furnace. In the above glass melting furnace, the gas phase zone is meant for a gas phase atmosphere zone in the furnace where the above glass material particles become liquid glass particles. That is, the gas phase zone is a region where the glass material particles become liquid glass particles.

Further, in the present invention, the heating means to form the gas phase zone is preferably at least one of an oxygen combustion burner to generate an oxygen combustion flame and a multiphase arc plasma generator constituted by at least one pair of electrodes to generate thermal plasma.

According to the present invention, in the case of the oxygen combustion flame by the oxygen combustion burner, a high temperature atmosphere of about 2,000°C can be formed, and in the case of the thermal plasma, a high temperature atmosphere of from 5,000 to 20,000°C can be formed. Accordingly, the glass material particles falling in the gas phase zone can be changed into liquid glass particles in a short time. Further, the oxygen combustion burner and the multiphase arc plasma generator may be installed alone, or both may be used in combination. Further, as an oxygen combustion burner to be used as a heating means to form a gas phase zone, it is possible to use a burner of a type which is integrated with the inlet for glass material particles.

Further, it is preferred that the oxygen combustion burner of the present invention is provided with the inlet for glass material particles and the inlets for glass cullet pieces.

According to the present invention, by integrally providing the inlet for glass material particles and the inlets for glass cullet pieces on the oxygen combustion burner, the heating means to form the gas phase zone, the inlet for glass material particles and the inlets for glass cullet pieces, can be handled as a one constituting component, whereby the installation in the glass melting furnace will be easy.

Further, according to the present invention, it is preferred that the inlets for glass cullet pieces are detachably mounted on the oxygen combustion burner.

According to the present invention, the inlets for glass cullet pieces wherein glass cullet pieces will pass, are likely to be damaged by glass cullet pieces having sharp corners (edge faces), and if they are used in a damaged state, the material constituting the inlets for glass cullet pieces is likely to fall into the glass melt and constitutes an impurity to deteriorate the quality of molten glass. Therefore, in a case where an inlet for glass cullet pieces is damaged, it is necessary to immediately change the inlet for glass cullet pieces. Thus, as in the present invention, by detachably providing the inlets for glass cullet pieces on the oxygen combustion burner, change of the inlets for glass cullet pieces can be made easy, whereby the quality of molten glass can be maintained.

Further, it is preferred that in a planar view, the plurality of inlets for glass cullet pieces are disposed concentrically with the inlet for glass material particles at the center.

According to the present invention, by providing the plurality of inlets for glass cullet pieces concentrically, in a planar view, with the inlet for glass material particles at the center, it is possible to effectively prevent scattering of particles.

Further, in the glass melting furnace of the present invention, it is preferred that in a planar view, a plurality of inlets for glass material particles are provided on a concentric circle, and the plurality of inlets for glass cullet pieces are disposed outside of the plurality of inlets for glass material particles, concentrically with the center portion of the concentric circle at the center. In a case where a plurality of gas phase zones are present in a furnace, it is preferred that the respective gas phase zones are formed by the respective gas phase heating means.

According to the present invention, in addition to the above-described effects of the invention, large amounts of glass material particles and glass cullet pieces can be used in combination, whereby the present invention is suitable for a large scale melting furnace suitable for the production of a glass product at a production rate of at least a few tens tons/day or at least a few hundreds tons/day. Further, in a case where in the present invention, an embodiment is applied wherein the inlet for glass material particles and the inlets for glass cullet pieces are integrally provided on the oxygen combustion burner, it is possible to enclose the region where the glass material particles become liquid glass particles, by double cylindrical flows of glass cullet pieces i.e. plural portions where the inlets for glass cullet pieces are integrated with the oxygen combustion burner, and outside portions of such plural portions, whereby the effect to prevent generation of scattered particles and the effect to utilize glass cullet, will be more improved.

Further, it is preferred that the inlets for glass cullet pieces of the present invention are provided to introduce glass cullet pieces having a short diameter (a) being 0.1 mm<a<50 mm.

The glass cullet pieces having such a short diameter (a) of the present invention are preferably ones which remain on a sieve with a mesh opening size of 0.1 mm and pass through a sieve with a mesh opening size of 50 mm.

According to the present invention, with respect to the size of glass cullet pieces, their short diameter is defined on such a basis that there is no substantial scattering of glass cullet pieces themselves by an air stream in the glass melting furnace, and in consideration of the efficiency for handling to recover glass cullet pieces from a market or from a process for producing molten glass, to store them and to transport them to the inlets for glass cullet pieces. In the present invention, glass cullet pieces having such a short diameter (a) is introduced into the furnace from the inlets for glass cullet pieces, and the falling glass cullet pieces are heated by the heating means to form the gas phase zone. The glass cullet pieces are preferably such that at least their surface portion is liquefied before reaching glass melt at the furnace bottom, but they may reach the glass melt without being liquefied. When at least the surface portion of the glass cullet pieces is liquefied, floating particles are likely to more readily be deposited thereon, and it is possible to further reduce the amount of particles which become scattering particles by escaping from spaces of the flow of glass cullet pieces.

Thus, by the glass melting furnace of the present invention, it is possible to reduce scattering of the glass material particles as well as the glass cullet pieces themselves and to introduce and melt glass cullet pieces easy to handle in the glass melting furnace. The present invention is thereby useful for a large scale melting furnace suitable for production of a glass product at a production rate of at least a few tens tons/day or at least a few hundreds tons/day.

Further, the melting furnace of the present invention is preferably provided with a melt heating member to heat a retained glass melt.

According to the present invention, by heating a glass melt by the melt heating member, it is possible to maintain the glass melt at a prescribed temperature, while preventing the temperature decrease of the glass melt, and such also contributes to melting of glass cullet pieces reached the glass melt in a solid state.

Further, such a melt heating member of the present invention is preferably located in the melt below the inlets for glass cullet pieces.

According to the present invention, in a case where a heat energy to melt glass cullet pieces is deficient, it is likely that unmelted glass cullet pieces precipitate at the furnace bottom of the glass melting furnace. Therefore, by providing the melt heating member at a position below the inlets for glass cullet pieces, it is possible to completely melt such unmelted glass cullet pieces.

Further, in order to accomplish the above object, the present invention provides an apparatus for producing a glass product, which comprises the glass melting furnace of the present invention, a forming means for forming molten glass, installed on a downstream side of the discharge outlet of the glass melting furnace, and an annealing means to anneal glass after the forming.

Further, in order to accomplish the above object, the present invention provides a process for producing a glass product, which comprises a step of producing molten glass by the process for producing molten glass of the present invention, a step of forming the molten glass, and a step of annealing glass after the forming.

### ADVANTAGEOUS EFFECTS OF INVENTION

As described above, according to the glass melting furnace and the process for producing molten glass of the present invention, it is possible to prevent damages to a furnace wall or a flue caused by deposition of scattering particles on the furnace wall or the flue and to prevent deterioration of the quality of molten glass, and accordingly, it is possible to produce molten glass having good quality over a long period of time.

Further, according to the apparatus for producing a glass product and the process for producing a glass product of the present invention, molten glass having good quality can be produced in a large amount by the apparatus and process for producing molten glass of the present invention, and accordingly, it is possible to produce a glass product having a good quality in a large amount over a long period of time.

### BRIEF DESCRIPTION OF DRAWINGS

Fig. 1 is a vertical cross-sectional view of a glass melting furnace in a first embodiment to constitute the apparatus for producing a glass product of the present invention.
Fig. 2 is a sectional plan view of the main part of the glass melting furnace shown in Fig. 1.
Fig. 3 is a vertical cross-sectional view of a glass melting furnace in a second embodiment to constitute the apparatus for producing a glass product of the present invention.
Fig. 4 is a sectional plan view of the main part of the glass melting furnace shown in Fig. 3.
Fig. 5 is a sectional plan view of the main part of a glass melting furnace in a third embodiment to constitute the apparatus for producing a glass product of the present invention.
Fig. 6 is a sectional plan view of the main part of a glass melting furnace in a fourth embodiment to constitute the apparatus for producing a glass product of the present invention.
Fig. 7 is a flow chart showing an embodiment of the process for producing a glass product of the present invention.

### DESCRIPTION OF EMBODIMENTS

Now, with reference to the accompanying drawings, preferred embodiments of the glass melting furnace, the process for producing molten glass, the apparatus for producing a glass product and the process for producing a glass product according to the present invention will be described.

In the glass melting furnaces shown in the drawings, a heating means for forming a gas phase zone is an oxygen combustion burner. The gas phase zone is constituted by a high temperature zone in the flame and in the vicinity of the flame of the oxygen combustion burner.

The inlet for glass material particles to supply glass material particles to the gas phase zone, is integrated with the oxygen combustion burner, and in the vicinity of the outlet of the oxygen combustion burner, a tube to supply a fuel gas, a tube to supply oxygen and a tube to supply glass material particles are coaxially constructed. Such a combination of the inlet for glass material particles and the oxygen combustion burner will be referred to as a heating unit for glass material particles.

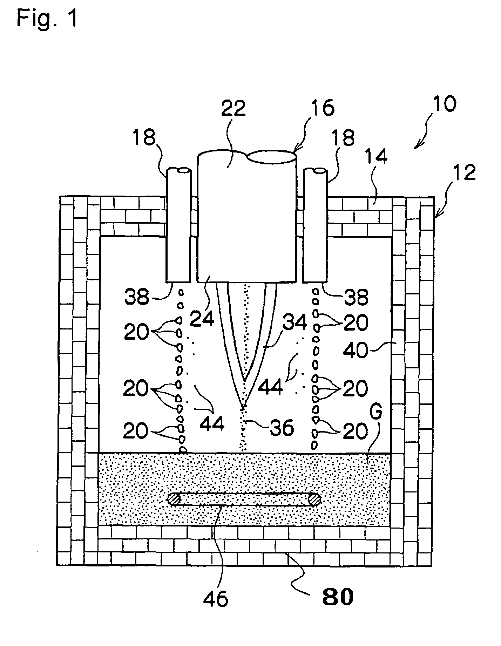

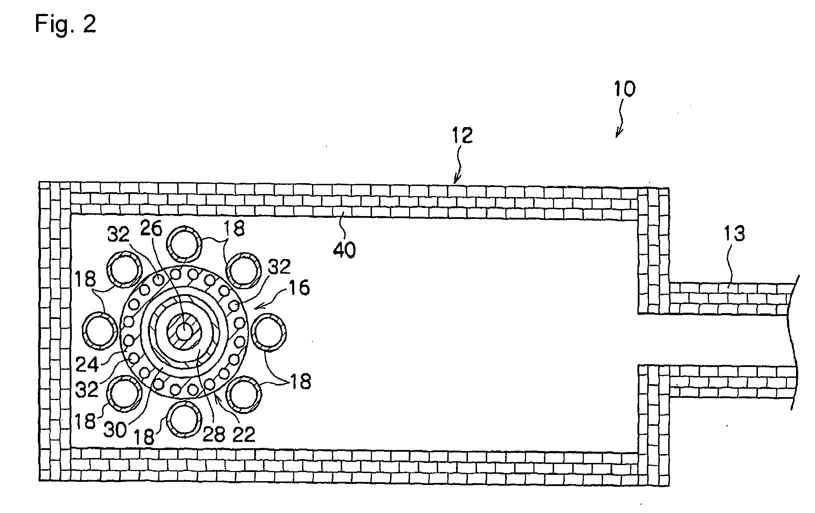

Fig. 1 is a vertical cross-sectional view of a glass melting furnace 10 in a first embodiment to constitute the apparatus for producing a glass product of the present invention, and Fig. 2 is a sectional plan view of the main part excluding the ceiling wall, of the glass melting furnace 10.

The glass melting furnace 10 comprises a melting tank 12 and an outlet 13 as a discharge outlet of a glass melt G, and the melting tank 12 and the outlet 13 are constructed by well known refractory bricks. Further, in the melting tank 12, on a ceiling wall 14 being its upper furnace wall, one heating unit 16 for glass material particles is provided, whereby in the gas phase atmosphere in the furnace, a high temperature gas phase zone is formed to convert glass material particles to liquid glass particles.

Further, in the melting tank 12, on the ceiling wall 14 being its upper furnace wall, eight glass cullet pieces-introducing tubes (inlets for glass cullet pieces) 18, 18 ... are disposed downward as passing through the ceiling wall 14. Further, in a planar view in Fig. 2, eight glass cullet pieces-introducing tubes (inlets for glass cullet pieces) 18, 18 ··· are disposed at equal distances concentrically with the heating unit 16 for glass material particles at the center. At the bottom of the melting tank 12, a glass melt G is retained at the furnace bottom 80 and the outlet 13, and the melting tank 12 is constructed so that the glass melt G produced in the melting tank 12 will flow to a downstream via the outlet 13. The furnace bottom 80 is constructed by well known refractory bricks.

Further, a case where the heating unit for glass material particles or the inlets for glass cullet pieces are located at an upper side wall of the glass melting furnace, instead of at the ceiling, is also within the scope of the present invention. In the case where the heating unit for glass material particles or the inlets for glass cullet pieces are to be formed on the side wall, they are formed in a height of up to 1 m in a vertical direction from the inner wall of the ceiling of the glass melting furnace. This means that if the heating unit for glass material particles or the inlets for glass cullet pieces are formed at a position exceeding 1 m in a vertical direction from the inner wall of the ceiling of the glass melting furnace, the vertical distance of the heating unit for glass material particles from the glass melt surface tends to be too short, whereby its angle to a horizontal direction becomes small, so that glass particles are likely to be blown to the opposed wall surface, thus leading to corrosion of the wall surface and the accompanying glass contamination, and further, glass cullet pieces are likely to fall on the glass melt G without being preliminarily sufficiently heated at the inlets for glass cullet pieces. The heating unit for glass material particles or the inlets for glass cullet pieces are provided preferably at a height of up to 80 cm, more preferably at a height of up to 60 cm, in a vertical direction from the inner wall of the ceiling of the glass melting furnace.

Further, the number of the glass cullet pieces-introducing tubes 18, 18 ··· is not limited to 8, and as described hereinafter, so long as it is possible to enclose the falling liquid glass particles by a flow of glass cullet pieces, the number of such tubes may be at most 7 or at least 9. Further, the disposition form of the glass cullet pieces-introducing tubes 18, 18 ··· is not limited to the above-mentioned concentric disposition form and may be a form to enclose the heating unit 16 for glass material particles, for example, a triangular, quadrangular or elliptical disposition form. However, in order to uniformly heat the glass cullet pieces 20 introduced from the glass cullet pieces-introducing tubes 18, 18 ··· by the heat of the heating unit 16 for glass material particles, the above-mentioned concentric disposition form is preferred. Further, the material for the glass cullet pieces-introducing tubes 18, 18 ... may, for example, be water-cooled metal or ceramics.

In each tank of the melting tank 12 and the outlet 13, the glass melt G is retained, and the glass melting furnace is constructed so that the glass melt G produced in the melting tank 12 is permitted to flow to a downstream via the outlet 13.

As the heating unit 16 for glass material particles, an oxygen combustion burner 22 having the inlet for glass material particles integrated, is used.

Such an oxygen combustion burner 22 is an oxygen combustion burner known as an inorganic powder-heating burner, wherein raw material, fuel and combustion assisting gas supply nozzles are properly arranged. As shown in Fig. 2, in a forward end nozzle 24 of the oxygen combustion burner 22, from the center towards the periphery, a combustion supply nozzle 26, a primary combustion assisting gas supply nozzle 28, a glass material supply nozzle 30 and a secondary combustion assisting gas supply nozzle 32 are sequentially arranged in this order concentrically as a whole. From the nozzle 24, a flame 34 is ejected downward, and into this flame 34 (i.e. a gas phase zone), glass material particles 36 are supplied from the glass material particles-supply nozzle 30 by gas transportation or mechanical transportation. It is thereby possible that the glass material particles 36 are formed into liquid glass particles certainly and in a short time. Further, although not shown in the drawings, to this oxygen combustion burner 22, a glass material particles-supply system to supply glass material particles to the glass material particles-supply nozzle 30, a fuel supply system to supply a fuel to the fuel supply nozzle 26 and a gas supply system to supply assisting gases to the primary combustion assisting gas supply nozzle 28 and the second combustion assisting gas supply nozzle 32, are connected.

In a case where an oxygen combustion burner 22 having the inlet for glass material particles integrated like this, the oxygen combustion burner 22 serves also as an inlet for glass material particles, whereby no separate inlet for glass material particles is required to be provided. However, an inlet for glass material particles to introduce glass material particles 36 into the flame 34 of the oxygen combustion burner 22 may be separately provided adjacent to the oxygen combustion burner 22.

Further, the heating means to form the gas phase zone is not limited to the oxygen combustion burner 22, and a multiphase arc plasma generator constituted by at least one pair of electrodes, to generate a thermal plasma, may be provided on the ceiling wall 14 of the melting tank 12, or both the oxygen combustion burner 22 and the multiphase arc plasma generator may be provided in the melting tank 12. Further, the temperature of the thermal plasma or the flame 34 of the oxygen combustion burner 22 is preferably set at a temperature of at least 1,600°C i.e. at least the melting temperature of silica sand, in order to rapidly gasify and disperse a gas component contained in the glass material particles 36 and to let the vitrification reaction proceed. The glass material particles 36 dropped into the furnace are thereby subjected to rapid gasification and dispersion by the flame 34 and/or thermal plasma and at the same time, heated at a high temperature and converted to liquid glass particles, which are settled at a bottom region of the melting tank 12 and become a glass melt. And, the glass melt formed by collection of the liquid glass particles are continuously heated by the flame 34 and/or the heat plasma, whereby a vitrified form will be maintained. Here, in the case of the flame 34, its center temperature is about 2,000°C in the case of oxygen combustion, and in the case of the thermal plasma, the temperature is from 5,000 to 20,000°C.

On the other hand, the glass cullet pieces-introducing tubes 18, 18 ··· are disposed in a vertical direction through the ceiling wall 14, and from inlets 38 formed at their lower ends, glass cullet pieces 20, 20 ··· are dropped. To such glass cullet pieces-introducing tubes 18, 18 ···, a glass cullet pieces-transporting system (not shown) to transport glass cullet pieces 20, 20 ··· by gas or mechanical transportation, is connected, whereby glass cullet pieces 20, 20 ··· of the after-described size are transported to the glass cullet pieces-introducing tubes 18, 18 ···. The introduced glass cullet pieces 20, 20 ··· will be heated to a temperature from about 1,400°C to 1,800°C by the flame 34 of the oxygen combustion burner 22, although the temperature may also depends on e.g. the amount of the glass cullet pieces 20 to be introduced, and will land on the surface of the glass melt G in the melting tank 12.

Further, by many glass cullet pieces 20, 20 ··· dropped from the glass cullet pieces-introducing tubes 18, 18 ···, a formation to enclose, by the flow of falling glass cullet pieces, the falling liquid glass particles with the flame 34 of the oxygen combustion burner 22 at the center, is formed. This enclosing formation becomes substantially cylindrical with the axis in a vertical direction. Here, in the present invention, "glass cullet" means a glass cullet composed of substantially the same glass composition as the glass of a glass product as the final object of the present invention. This glass cullet is, usually, generated in a step of producing a glass product as the final object from a glass melt formed at the furnace bottom in the present invention. However, the glass cullet is not limited thereto, and it may be a glass cullet which is formed from a step for producing other glass products made of substantially the same glass composition as the glass of a glass product as the final object of the present invention, or a glass cullet formed in a step of using the glass product of the final object obtained in the present invention. A glass melting furnace in such a step of producing other glass products is not limited to the glass melting furnace employing an in-flight melting method.

As the glass composition of the glass cullet is substantially the same as the glass composition of the glass to be formed from the glass material particles, the glass composition of a glass melt as a mixture of liquid glass obtained by melting of the glass cullet and liquid glass formed from the glass material particles, becomes uniform, and the thermal energy required for homogenization is small, and the time required for the homogenization is also short. The glass composition of the glass cullet and the glass composition of the liquid glass particles formed from the glass material particles are preferably the same, but the glass composition may slightly change during a period wherein the glass melt formed at the bottom of the melting furnace is formed into a glass product (e.g. vaporization of a volatile glass component such as boron oxide), and such a slight difference in the glass composition is allowable.

Further, the glass cullet pieces are made of a substance which is already glass, and accordingly, heated glass cullet pieces will simply be melted to form liquid glass particles. On the other hand, the glass material particles are formed into liquid glass particles by a chemical reaction such as heat decomposition of glass material (for example, thermal decomposition of a metal carbonate to a metal oxide) or a reaction and melting of components to form glass, so-called a vitrification reaction. The mechanism for conversion of solid particles to liquid glass particles is different between the glass material particles and the glass cullet pieces, but liquid glass particles to be formed are liquid glass particles having substantially the same glass composition.

Now, function of the glass melting furnace constructed as described above will be described.

The glass melting furnace in this embodiment is a melting furnace to melt glass material particles 36. The high temperature gas phase zone is formed by one oxygen combustion burner 22, and the glass material particles 36 are converted to liquid glass particles in this gas phase zone. That is, the glass material particles 36 are introduced from the oxygen combustion burner 22 into the furnace, and the falling glass material particles are heated by the flame 34 of the oxygen combustion burner 22 to form liquid glass particles. The liquid glass particles formed from the glass material particles 36 will fall downward and will be collected at the furnace bottom 80 to form glass melt G, and the glass melt G is temporarily retained at the furnace bottom 80.

It is not essential that the liquid glass particles will reach the furnace bottom 80 or the surface of glass melt G in the form of individual particles. The liquid glass particles may land on the furnace bottom 80 or on the surface of glass melt G as two or more of them are fused in the gas phase.

Simultaneously with such an operation to introduce and melt the glass material particles 36, 36 ···, glass cullet pieces 20, 20 arse dropped from eight glass cullet pieces-introducing tubes 18, 18 ···, to form an enclosure formation by a substantially cylindrical flow of glass cullet pieces with the flame 34 at the center. That is, in order to enclose the flame 34 formed by the oxygen combustion burner 22 (thermal plasma arc in the case of a multiphase arc plasma generator), glass cullet pieces 20, 20 ··· are dropped from eight glass cullet pieces-introducing tubes 18, 18 ···, so that the flow of falling individual glass cullet pieces becomes cylindrical as a whole, thereby to partition off the furnace wall 40 from the flame 34 (or thermal plasma arc). And, particles 44, 44 ··· scattering from the flame 34 (or thermal plasma arc) are captured as deposited on the surface of the falling glass cullet pieces 20, 20 ··· and dropped on glass melt G in the melting tank 12. This is different from so-called air curtain by using simply air or the like, or a case of spraying glass material particles together with air, and since the glass cullet pieces to be utilized are of a relatively large size, particles scattering from the gas phase zone (particles floating in the gas phase zone) 44, 44 ··· can be effectively captured.

Thus, by the glass melting furnace 10 in the first embodiment, it is possible to prevent the floating particles 44, 44 ··· from becoming scattering particles and reaching the furnace wall 40, whereby the deposition amount of the scattering particles depositing on the furnace wall 40 or the flue (not shown) will be remarkably reduced. Thus, by such a glass melting furnace 10, it is possible to prevent damages to a furnace wall or a flue and deterioration of the quality of glass melt G caused by deposition of the floating particles 44, 44 ··· in the form of scattering particles on the furnace wall 40 and the flue.

On the other hand, with respect to the glass cullet pieces 20 to be introduced from the glass cullet pieces-introducing tubes 18, their particle size has been defined to introduce them to the melting tank 12 in consideration of the fact that the glass cullet pieces themselves are less likely to scatter and in consideration of handling efficiency from the viewpoint of recovery of the glass cullet pieces from a production step or from the market, storage and transportation to the glass cullet pieces-introducing tubes. That is, the short diameter (a) of the glass cullet pieces is preferably made to be 0.1 mm<a<50 mm. The glass cullet pieces having a short diameter (a) are classified by permitting them to remain on a sieve or to pass therethrough, by changing the mesh opening size. That is, the glass cullet pieces in the present invention are preferably ones which remain on a sieve having a mesh opening size of 0.1 mm and which pass through a sieve having a mesh opening size of 50 mm. The short diameter (a) is more preferably 0.5 mm<a<30 mm, from the viewpoint of the above-mentioned handling efficiency of the glass cullet pieces. The short diameter (a) is further preferably 0.5 mm<a<20 mm from the viewpoint of the above handling efficiency of the glass cullet pieces.

The average particle size (weight average) of the glass material particles is preferably from 30 to 1,000 µm. More preferably, glass material particles having an average particle size (weight average) within a range of from 50 to 500 µm, are used, and further, glass material particles having an average particle size within a range of from 70 to 300 µm are further preferred. The average particle size (weight average) of liquid glass particles formed by melting of the glass material particles, is, usually, likely to be about 80% of the average particle size of the glass material particles.

In this embodiment, the glass cullet pieces 20 having such a particle size (a) are introduced into the furnace from the glass cullet pieces-introducing tubes 18, 18 ···, and the falling glass cullet pieces 20, 20 ··· are heated by the flame 34 of the oxygen combustion burner 22. The heated glass cullet pieces 20, 20 ... are dropped downward to the surface of glass melt G.

Before reaching the surface of glass melt G, two or more of glass cullet pieces may be fused, and such fused glass cullet pieces may be landed on the glass melt G. If the amount of glass cullet pieces 20 introduced, per unit time, from one glass cullet pieces-introducing tube 36, becomes large, such melting of glass cullet pieces is more likely to occur.

Further, it is ideal that glass cullet pieces 20 can be completely liquefied during the falling by the oxygen combustion burner 22. However, it is difficult to completely liquefy glass cullet pieces 20 to their core, since their size is far large as compared with fine particulate glass material particles 36. Accordingly, in such a case, glass cullet pieces not liquefied to the core will fall on glass melt G. However, even in such a case, since glass melt G is heated by the heat by the oxygen combustion burner 22 and by the radiation heat from the furnace body, any heterogeneous portion in the glass melt formed from the glass cullet pieces 20, 20 ··· not completely liquefied to the core, will be homogenized in a short time and will become a uniform glass melt G.

Further, the oxygen combustion burner 22 is not one which preheats only glass cullet pieces 20 alone, but it heats also glass material particles 36 and the glass melt G in the melting tank 12. Therefore, it is entirely different in its function from a preheating device for glass cullet pieces installed outside of the furnace.

Thus, by the glass melting furnace in this embodiment, together with the glass material particles 36, the glass cullet pieces 20 can be introduced and melted in the melting tank 12. It is thereby possible to use the glass material particles 36 and the glass cullet pieces 20 in combination, and such a furnace is suitable as a large scale melting furnace suitable for the production of a glass product at a production rate of at least a few tens tons/day or at least a few hundreds tons/day.

Further, as shown in Fig. 1, a melt-heating device (a melt-heating member) 46 is provided in the melting tank 12 in this embodiment. This melt-heating device (the melt-heating member) 46 is provided at a position immersed in the glass melt G and heats the glass melt G to about 1,400°C to 1,600°C.

By heating the glass melt G by the melt-heating device 46 in such a manner, it is possible to maintain the glass melt G at a temperature of from about 1,400°C to 1,600°C, while preventing lowering of the temperature of the glass melt G in the melting tank 12, and such heating will also contribute to melting of the glass cullet pieces 20 landed on the glass melt G.

Further, this melt-heating device 46 is preferably located in the vicinity of the furnace bottom 42 in the melting tank 12 and below the cullet pieces-introducing tubes 18, 18 ···. That is, in a case where the heat energy to melt glass cullet pieces 20 has become deficient, unmelted glass cullet pieces 20 are likely to precipitate above the furnace bottom 80, and therefore, by disposing the melt-heating device 46 above the furnace bottom 80, it is possible to completely melt such unmelted glass cullet pieces 20. Further, by the melt-heating device 46, it is possible to heat the glass melt G having a low temperature on which glass cullet pieces 20, 20 ··· will land, whereby the temperature of the glass melt G can be made substantially uniform in the melting tank 12.

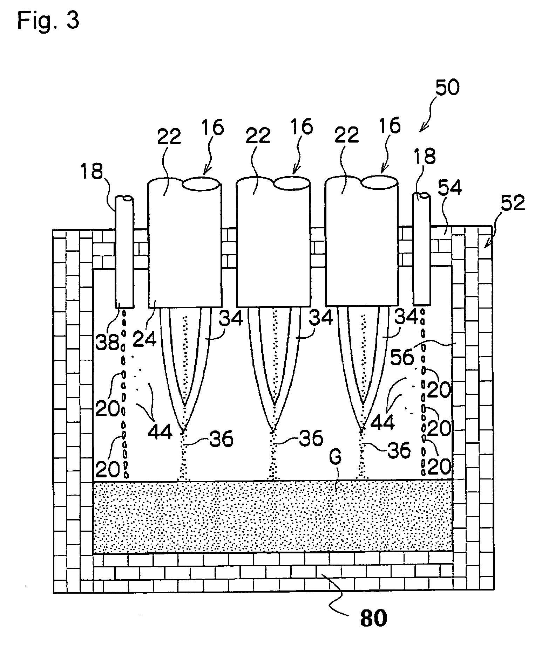

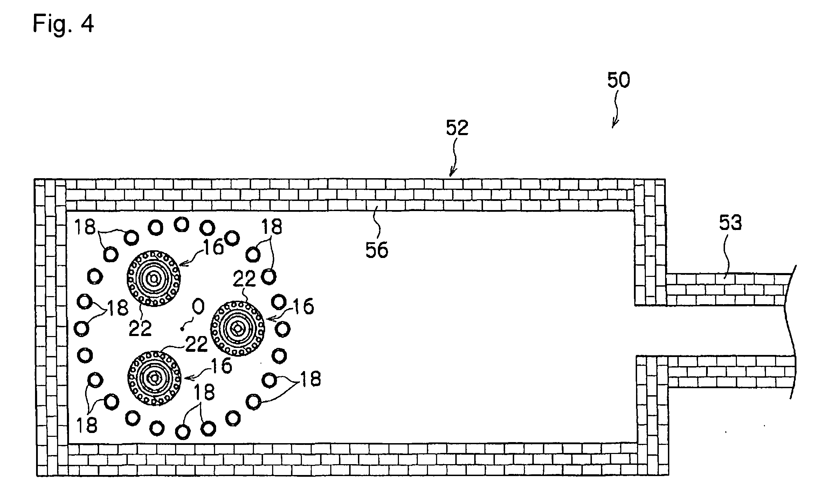

Fig. 3 is a vertical cross-sectional view of a glass melting furnace 50 in a second embodiment to constitute the apparatus for producing a glass product of the present invention, and Fig. 4 is a sectional plan view of the main part of the glass melting furnace 50, wherein with respect to the same or similar components as in the glass melting furnace 10 shown in Figs. 1 and 2, the same reference symbols are used for their description.

In a melting tank 52 of the glass melting furnace 50, on the ceiling wall 52 being an upper furnace wall of the glass melting furnace, three glass material particles-heating units 16, 16 ··· and a plurality of glass cullet pieces-introducing tubes (inlets for glass cullet pieces) 18, 18 ··· are, respectively, provided downward through the ceiling wall 54. Further, in a planar view in Fig. 4, the glass material particles-heating units 16, 16 ··· are disposed at equal distances concentrically with the point O at the center. Further, the glass cullet pieces-introducing tubes 18, 18 ... are disposed outside the three glass material particles-heating units 16, 16 ··· in equal distances concentrically with the point O as the center.

Like the glass melting furnace 10 shown in Figs. 1 and 2, a glass melting furnace 50 having such a construction, is also capable of forming an enclosure formation by the above-described cylindrical flow of glass cullet pieces by glass cullet pieces 20, 20 ··· dropped from the glass cullet pieces-introducing tubes 18, 18 ···. It is thereby possible to have particles 44, 44 ··· floating in the gas phase zone deposited on the glass cullet pieces, and by such a glass melting furnace 50, it is possible to prevent scattering of particles, whereby the deposit amount of particles to be deposited on a furnace wall 56 or a flue (not shown) can be remarkably reduced. It is thereby possible to prevent damages to the furnace wall or the flue and deterioration of the quality of glass melt G caused by deposition of scattering particles on the furnace wall 56 or the flue.

Further, according to this glass melting furnace 50, by installing three glass material particles-heating units 16,16 ··· and a plurality of glass cullet pieces-introducing tubes 18,18 ···, it has been made possible to use a large amount of glass material particles 36 and a large amount of glass cullet pieces 20 in combination, and such a furnace is suitable for a large scale melting furnace suitable for the production of a glass product at a production rate of at least a few tens tons/day or at least a few hundreds tons/day. Further, the number of glass material particles-heating units 16 to be disposed is not limited to 3, and the number may be at least 2.

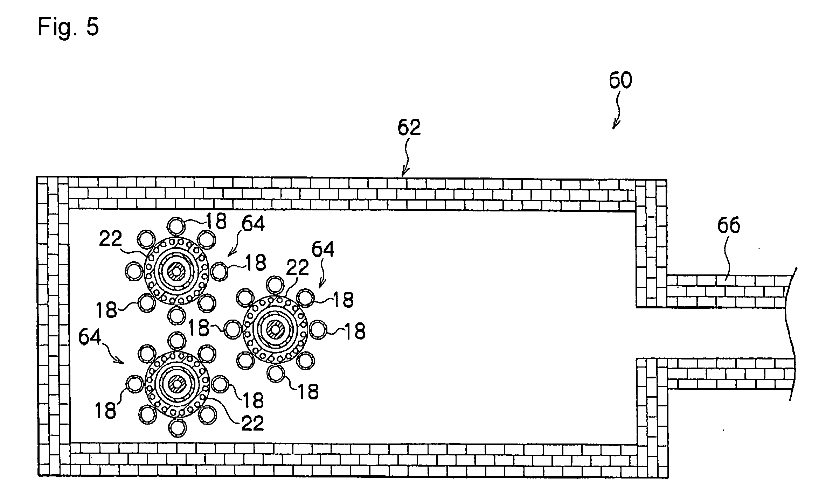

Fig. 5 is a sectional plan view of the main part of a glass melting furnace 60 in a third embodiment to constitute the apparatus for producing a glass product of the present invention, wherein with respect to the same or similar components as in the glass melting furnace 10 shown in Figs. 1 and 2, the same reference symbols are used for their description.

In a melting tank 62 of the glass melting furnace 60, on its ceiling wall (not shown), three glass material particles-heating units 64, 64 ··· are, respectively, provided downward through the ceiling wall. Further, on a downstream side of the melting tank 62, an outlet 66 is provided.

A glass material particles-heating unit 64 has a construction wherein an oxygen combustion burner 22 and eight glass cullet pieces-introducing tubes 18, 18 ··· are integrally formed, and the glass cullet pieces-introducing tubes 18, 18 ··· are disposed at equal distances around the oxygen combustion burner 22 having a circular cross-section. Further, the glass cullet pieces-introducing tubes 18, 18 ··· are detachably provided on the oxygen combustion burner 22 via an attachment member not shown. Further, the melting tank 62 in Fig. 5 is also constructed to have a cubic shape like the melting tanks 12 and 52 shown in Figs. 1 to 4.

Further, by disposing the glass cullet pieces-introducing tubes 18, 18 ··· around the oxygen combustion burner 22, it is possible to form an enclosure formation by a similar flow of glass cullet pieces, whereby the same effect as in the case of the glass melting furnaces 10 and 50 shown in Figs. 1 to 4 can be obtained.

On the other hand, a glass cullet pieces-introducing tube 18 in which glass cullet pieces will pass, is likely to be damaged by glass cullet pieces having sharp corners (edge faces). If a glass cullet pieces-introducing tube 18 is used in a damaged state, the material of the glass cullet pieces-introducing tube 18 may fall into the glass melt G to form an impurity which deteriorates the quality of the molten glass. Therefore, if a glass cullet pieces-introducing tube 18 is damaged, it is necessary to immediately change the glass cullet pieces-introducing tube 18, and as in the case of this glass material particles-heating unit 64, by detachably providing the glass cullet pieces-introducing tube 18 on the oxygen combustion burner 22, such a change of the glass cullet pieces-introducing tube 18 becomes easy, whereby the quality of the molten glass can be maintained.

In Fig. 5, a case wherein three glass material particles-heating units 64, 64 ··· are disposed, is shown, but the number of such units is not limited to 3, and a suitable number of units may be formed depending upon the size of the melting tank 62. Further, the disposition positions of the glass raw material particles-heating units 64 are not limited to an upper stream side as shown in Fig. 5, and they may be disposed over the entire region of the melting tank 62.

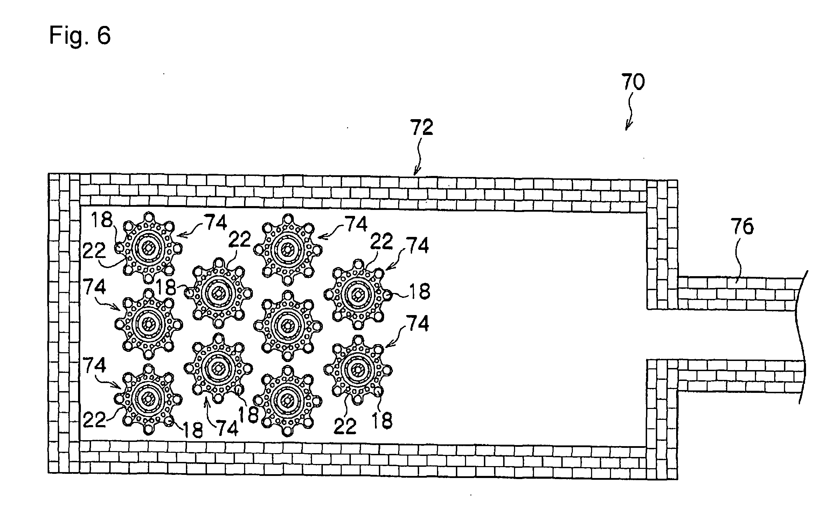

Fig. 6 is a sectional plan view of the main part of a glass melting furnace 70 in a fourth embodiment to constitute the apparatus for producing a glass product of the present invention, wherein with respect to the same or similar members as in the glass melting furnace 10 shown in Figs. 1 and 2, the same reference symbols are used for their description.

In a melting tank 72 of the glass melting furnace 70, on its ceiling wall (not shown), ten glass material particles-heating units 74, 74 ··· are, respectively, provided downward through the ceiling wall. Further, on a downstream side of the melting tank 72, an outlet 76 is provided.

A glass material particles-heating unit 74 has a construction wherein an oxygen combustion burner 22 and eight glass cullet pieces-introducing tubes 18, 18 ··· are integrally formed, and the glass cullet pieces-introducing tubes 18, 18 ··· are disposed at equal distances around the oxygen combustion burner 22 having a circular cross-section.

This glass material particles-heating unit 74 is also capable of forming an enclosure formation by the same cullet pieces, whereby the same effects as in the case of the glass melting furnaces 10, 50 and 60 shown in Figs. 1 to 5, can be obtained.

Further, in Fig. 6, an example wherein ten glass material particles-heating units 74, 74 ··· are provided, is shown, but the number of such units is not limited to 10, and a suitable number of units may be formed depending upon the size of the melting tank 72. Further, the disposition positions of the glass material particles-heating units 74 is also not limited to an upstream side and an intermediate stream side as shown in Fig. 6, and they may be disposed over the entire region of the melting tank 72.

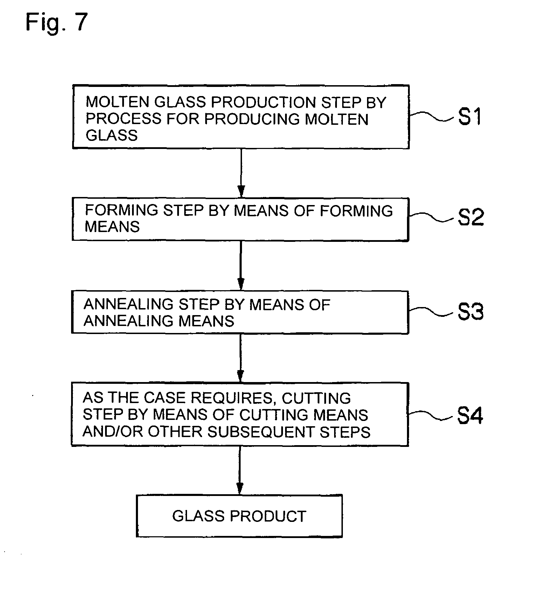

Fig. 7 is a flow chart showing an embodiment of the process for producing a glass product. Fig. 7 shows in addition to a melting glass production step (S1), a forming step (S2) by means of a forming means and an annealing step (S3) by means of an annealing means, as constituting elements of the process for producing a glass product, a cutting step and other subsequent steps (S4) which are employed as the case requires.

A glass melt G melted in any one of the melting tanks 12, 52, 62 and 72 in Figs. 1 to 7, is sent to a forming means via an outlet and a conduit structure not shown and then formed (forming step). The glass after the forming is annealed by means of an annealing means so that no residual stress will remain in the core of the glass solidified after the forming (annealing step) and further, as the case requires, cut (cutting step) and via other subsequent steps, formed into a glass product.

For example, in the case of a plate glass, a glass melt G is formed into a glass ribbon by a forming means, and the glass ribbon is annealed by an annealing means and then cut into a desired size and, as the case requires, subjected to post processing such as polishing the glass edges to obtain a plate glass.

Molten glass to be produced by the process for producing molten glass of the present invention is not particularly limited with respect to the composition so long as it is molten glass produced by an in-flight melting method. Thus, it may be soda lime glass or borosilicate glass. Further, applications of the glass product produced are not limited for buildings or vehicles, and various applications to flat panel display or others may be mentioned.

In the case of soda lime glass to be used for a plate glass for buildings or vehicles, it preferably has a composition which comprises, as represented by mass percentage based on oxides, from 65 to 75 % of SiO₂, from 0 to 3% of Al₂O₃, from 5 to 15% of CaO, from 0 to 15% of MgO, from 10 to 20% of Na₂O, from 0 to 3% of K₂O, from 0 to 5% of Li₂O, from 0 to 3% of Fe₂O₃, from 0 to 5% of TiO₂ from 0 to 3% of CeO₂, from 0 to 5% of BaO, from 0 to 5% of SrO, from 0 to 5% of B₂O₃, from 0 to 5% of ZnO, from 0 to 5% of ZrO₂. from 0 to 3% of SnO₂, and from 0 to 0.5% of SO₃.

In the case of alkali-free glass to be used for substrates for liquid crystal display, it preferably has a composition which comprises, as represented by mass percentage based on oxides, from 39 to 70% of SiO₂, from 3 to 25% of Al₂O₃, from 1 to 20% of B₂O₃, from 0 to 10% of MgO, from 0 to 17% of CaO, from 0 to 20% of SrO, and from 0 to 30% of BaO.

In the case of mixed alkali type glass to be used for substrates for plasma display, it preferably has a composition which comprises, as represented by mass percentage based on oxides, from 50 to 75% of SiO₂, from 0 to 15% of Al₂O₃ from 6 to 24% of MgO+CaO+SrO+BaO+ZnO, and from 6 to 24% of Na₂O+K₂O.

In the case of borosilicate glass to be used for other applications e.g. heat resistant containers or laboratory instruments, it preferably has a composition which comprises, as represented by mass percentage based on oxides, from 60 to 85% of SiO₂, from 0 to 5% of Al₂O₃, from 5 to 20% of B₂O₃, and from 2 to 10% of Na₂O+K₂O.

In this embodiment, the glass material particles-heating units and glass cullet pieces-introducing tubes are described to be disposed vertically downward but the disposition is not limited thereto, and they may be inclined so long as directed downward.

In this embodiment, both the glass material particles-heating units and the glass cullet pieces-introducing tubes are described as installed at the ceiling of the glass melting furnace, but their position is not limited thereto, so long as both are located at an upper furnace wall of the glass melting furnace. For example, the glass material particles-heating units may be installed on the ceiling of the glass melting furnace, and the glass cullet pieces-introducing tubes may be installed on a side wall of the glass melting furnace.

In this embodiment, the ceiling surface of the glass melting furnace is described as having a flat shape, but the ceiling surface is not limited thereto and may be, for example, arched or domed.

### INDUSTRIAL APPLICABILITY

The molten glass produced by the present invention is formed into glass products of various shapes by means of various forming means such as a float bath, a fusion forming machine, a roll out forming machine, a blow forming machine, a press molding machine, etc.

The entire disclosure of Japanese Patent Application No. 2009-156931 filed on July 1, 2009 including specification, claims, drawings and summary is incorporated herein by reference in its entirety.

### REFERENCE SYMBOLS

10: Glass melting furnace, 12: melting tank, 13: outlet (discharge outlet), 14: ceiling wall, 16: glass material particles-heating unit (inlet for glass material particles and heating means to form gas phase zone), 18: glass cullet pieces-introducing tube, 20: glass cullet pieces, 22: oxygen combustion burner, 24: nozzle, 26: fuel supply nozzle, 28: primary combustion assisting gas supply nozzle, 30: glass material supply nozzle, 32: primary combustion assisting gas supply nozzle, 34: flame, 36: glass material particles, 38: inlet for glass cullet pieces, 40: furnace wall, 44: floating particles, 46: melt-heating device, 50: glass melting furnace, 52: melting tank, 54: ceiling wall, 56: furnace wall, 60: glass melting furnace, 62: melting tank, 64: glass material particles-heating unit, 66: outlet (discharge outlet), 70: glass melting furnace, 72: melting tank, 74: glass material heating unit, 76: outlet (discharge outlet), 80: furnace bottom

## Claims

1. A glass melting furnace for converting glass material particles to liquid glass particles in a gas phase atmosphere in the glass melting furnace, collecting the liquid glass particles at a bottom of the glass melting furnace to form a glass melt and discharging the glass melt, which comprises:
an inlet for glass material particles provided downward on an upper furnace wall in the glass melting furnace,
a heating means below the inlet for glass material particles in the glass melting furnace, to form a gas phase zone to convert the glass material particles to liquid glass particles,
a plurality of inlets for glass cullet pieces to introduce glass cullet pieces, provided downward on an upper furnace wall in the glass melting furnace, and disposed at prescribed distances to enclose the inlet for glass material particles and the heating means,
a furnace bottom to collect the liquid glass particles to form a glass melt, and
a discharge outlet to discharge the glass melt.

2. The glass melting furnace according to Claim 1, wherein the heating means to form a gas phase zone is at least one of an oxygen combustion burner to generate an oxygen combustion flame and a multiphase arc plasma generator constituted by at least one pair of electrodes to generate thermal plasma.

3. The glass melting furnace according to Claim 2, wherein the oxygen combustion burner is provided with the inlet for glass material particles and the inlets for glass cullet pieces.

4. The glass melting furnace according to Claim 3, wherein the inlets for glass cullet pieces are detachably mounted on the oxygen combustion burner.

5. The glass melting furnace according to any one of Claims 1 to 4, wherein in a planar view, the plurality of inlets for glass cullet pieces are disposed concentrically with the inlet for glass material particles at the center.

6. The glass melting furnace according to any one of Claims 1 to 5, wherein in a planar view, a plurality of inlets for glass material particles are provided on a concentric circle, and the plurality of inlets for glass cullet pieces are disposed outside of the plurality of inlets for glass material particles, concentrically with a center portion of the concentric circle at the center.

7. The glass melting furnace according to any one of Claims 1 to 6, wherein the inlets for glass cullet pieces are provided to introduce glass cullet pieces having a short diameter (a) being 0.1 mm<a<50 mm.

8. The glass melting furnace according to Claim 7, wherein the glass cullet pieces having the above short diameter (a) are ones which remain on a sieve with a mesh opening size of 0.1 mm and pass through a sieve with a mesh opening size of 50mm.

9. The glass melting furnace according to any one of Claims 1 to 8, which is provided with a melt heating member to heat the glass melt in the melting furnace.

10. The glass melting furnace according to Claim 9, wherein the melt heating member is disposed in the glass melt below the inlets for glass cullet pieces.

11. A process for producing molten glass by means of the glass melting furnace as defined in any one of Claims 1 to 10, which comprises letting some of particles derived from the glass material particles introduced from the inlet for glass material particles deposit on glass cullet pieces introduced from the plurality of inlets for glass cullet pieces to prevent the particles from scattering from the gas phase zone.

12. A process for producing molten glass, which comprises converting glass material particles to liquid glass particles in a gas phase atmosphere in a glass melting furnace, and collecting the liquid glass particles at a bottom of the glass melting furnace to form a glass melt, wherein:
the glass material particles are supplied downward from an upper furnace wall in the glass melting furnace and permitted to pass through a gas phase zone formed by a heating means thereby to be converted to liquid glass particles,
glass cullet pieces are supplied downward from an upper furnace wall in the glass melting furnace and permitted to fall so that a flow of the falling glass cullet pieces encloses an area where glass material particles pass through, and
the liquid glass particles and the glass cullet pieces are collected at the furnace bottom to form a glass melt.

13. An apparatus for producing a glass product, which comprises the glass melting furnace as defined in any one of Claims 1 to 10, a forming means for forming molten glass, installed on a downstream side of the discharge outlet of the glass melting furnace, and an annealing means to anneal glass after the forming.

14. A process for producing a glass product, which comprises a step of producing molten glass by the process for producing molten glass as defined in Claim 11 or 12, a step of forming the molten glass, and a step of annealing glass after the forming.
